# EUROPÄISCHE PATENTSCHRIFT

(11) **EP 3 037 293 B1**
(45) Veröffentlichungstag und Bekanntmachung des Hinweises auf die Patenterteilung: **09.08.2017**
(21) Anmeldenummer: 14199778.3
(22) Anmeldetag: 22.12.2014
(51) Int. Cl.: B60K 1/00, E02F 9/02, E02F 9/12, E02F 9/20

(54) **Selbstfahrende Arbeitsmaschine**
Self-propelled work machine
Machine-outil automobile

(43) Veröffentlichungstag der Anmeldung: 29.06.2016
(73) Patentinhaber: Sennebogen Maschinenfabrik GmbH, 94315 Straubing (DE)
(72) Erfinder: Sennebogen, Erich, 94315 Straubing (DE)
(74) Vertreter: advotec.

(56) Entgegenhaltungen:
- EP-A1- 2 672 024
- DE-A1-102012 201 141
- JP-A- 2001 207 482
- US-A- 4 102 461

## Beschreibung

Die Erfindung betrifft eine selbstfahrende Arbeitsmaschine, insbesondere einen Kran, einen Bagger, eine Materialumschlagmaschine, einen Telehandler oder dergleichen. Das Dokument DE102012201141 A1, dass den nächstliegenden Stand der Technik repräsentiert, zeigt eine selbstfahrende Arbeitsmaschine mit den Merkmalen des Oberbegriffs des Anspruchs 1. Mobile bzw. selbstfahrende Arbeitsmaschinen sind aus der Praxis bekannt, beispielsweise als Mobilkran, der einen fahrbaren bzw. mobilen Unterwagen aufweist, auf dem ein Oberwagen drehbar gelagert ist. In dem Oberwagen ist beispielsweise ein Dieselmotor angeordnet, der zum Antrieb von Hydraulikaggregaten eines Kranauslegers und auch zum Antrieb eines in dem Unterwagen angeordneten Hydraulikmotors genutzt werden kann, mittels dessen Antriebsräder, die an dem Unterwagen gelagert sind, angetrieben werden können, sodass die Arbeitsmaschine verfahrbar ist. Um die hydraulische Energie in den Unterwagen zu transportieren, ist eine hydraulische Drehdurchführung erforderlich. Hydraulische Drehdurchführungen sind technisch aufwändig, teuer und auch mit einem beträchtlichen Verlust an Wirkungsgrad behaftet.

Der Erfindung liegt daher die Aufgabe zugrunde, eine selbstfahrende Arbeitsmaschine der vorstehend beschriebenen Art mit einem effizienten Antrieb des Unterwagens zu schaffen.

Diese Aufgabe ist erfindungsgemäß durch die selbstfahrende Arbeitsmaschine mit den Merkmalen des Anspruchs 1 gelöst.

Es wird also eine selbstfahrende Arbeitsmaschine vorgeschlagen, die einen Unterwagen, der mit Antriebsrädern versehen ist, die mittels einer Antriebseinrichtung angetrieben sind, und einen Oberwagen umfasst, der auf dem Unterwagen drehbar gelagert und in dem ein Antriebsaggregat angeordnet ist und an dem ein Ausleger für ein Arbeitswerkzeug gelagert ist. Das Antriebsaggregat treibt einen Stromgenerator an, der eine Stromquelle für einen in dem Oberwagen angeordneten Elektromotor ist, der die Antriebseinrichtung für mindestens eines der an dem Unterwagen gelagerten Räder ist.

Bei der Arbeitsmaschine nach der Erfindung ist mithin der Antrieb für den Unterwagen in dem Oberwagen angeordnet, wobei ein Antriebsmoment über entsprechende Wellen in den Unterwagen übertragen wird. Die Fahrbewegung wird also im Oberwagen ausgelöst. In dem Oberwagen hat der den Antrieb darstellende Elektromotor eine direkte Verbindung zu seiner Stromquelle, die von dem in dem Oberwagen angeordneten Antriebsaggregat angetrieben ist. Gegenüber den oben beschriebenen, bekannten mobilen Arbeitsmaschinen kann damit eine Energiedurchfizhrung von dem drehbaren Oberwagen zu dem Unterwagen mittels Drehdurchführungen vermieden werden. Es kann somit ein beträchtlich höherer Wirkungsgrad hinsichtlich des Fahrantriebs für den Unterwagen erzielt werden. Dies ist auch in der geringen Entfernung zwischen der Stromquelle und dem Elektromotor begründet, der die Antriebseinrichtung für den Unterwagen darstellt. Zudem zeichnet sich die Arbeitsmaschine nach der Erfindung durch eine hohe Kompaktheit aus, da die komplette Regelung und Steuerung für die Betätigung der Arbeitsmaschine in dem Oberwagen angeordnet sein kann. Durch die beträchtliche Erhöhung des Wirkungsgrades aufgrund der Anordnung der Antriebseinrichtung für den Unterwagen in dem Oberwagen ist es auch möglich, ein Antriebsaggregat mit gegenüber dem Stand der Technik geringerer Leistung einzusetzen. Dies ist wiederum mit geringeren Beschaffungskosten und auch mit geringeren Betriebskosten verbunden, da der Energieverbrauch gegenüber dem Stand der Technik wesentlich reduziert ist.

Bei einer mobilen bzw. selbstfahrenden Arbeitsmaschine ist für den Fahrbetrieb größte Einzelleistung aufzubringen, die von der insgesamt aufzubringenden Antriebsleistung abverlangt wird. Es ist deshalb von besonderem Vorteil, für den Fahrbetrieb bzw. die Fahrfunktion einen effizienten Antrieb mit einer effizienten Leistungsübertragung bei hohem Wirkungsgrad zu wählen.

Bei einer bevorzugten Ausführungsform der selbstfahrenden bzw. mobilen Arbeitsmaschine nach der Erfindung ist eine Zentralwelle vorgesehen, die von dem Elektromotor angetrieben ist und deren Achse mit der Drehachse des Oberwagens zusammenfällt. Die Zentralwelle ist also die Welle, über die das von dem Elektromotor erzeugte Antriebsmoment in den Unterwagen und zu den Antriebsrädern, die an dem Unterwagen gelagert sind, übertragen wird. Die Zentralwelle, die in der Drehachse des Oberwagens sitzt, stellt ein einfaches und kostengünstig herstellbares Bauteil dar, über das in effizienter Weise das von dem Elektromotor erzeugte Moment übertragen werden kann. Die Zentralwelle hat bezogen auf eine Hauptebene des Unterwagens eine rechtwinklige Ausrichtung.

Um das von der Zentralwelle in den Unterwagen übertragene Antriebsmoment auf die Antriebsräder übertragen zu können, ist die Zentralwelle bei einer zweckmäßigen Ausfiihrungsform der selbstfahrenden Arbeitsmaschine nach der Erfindung mit einem Getriebe verbunden, das in dem Unterwagen angeordnet ist und über das die Antriebsräder angetrieben sind.

Das Antriebsaggregat der selbstfahrenden Arbeitsmaschine nach der Erfindung kann in vielfältiger Weise ausgebildet sein. Vorzugsweise ist das Antriebsaggregat ein Verbrennungsmotor, insbesondere ein Dieselmotor.

Bei einer alternativen Ausführungsform der Arbeitsmaschine nach der Erfindung kann das Antriebsaggregat aber auch eine Brennstoffzelle umfassen. Diese Ausführungsform ist besonders umweltfreundlich zu betreiben.

Je nach Auslegung der Arbeitsmaschine nach der Erfindung hat das Antriebsaggregat beispielsweise eine Maximalleistung zwischen 50 kW und 300 kW.

Zweckmäßigerweise durchgreift die Zentralwelle, die von dem Elektromotor angetrieben ist, einen Drehkranz, über den der Oberwagen auf dem Unterwagen drehbar gelagert ist, über den eine Endlosdrehung des Oberwagens auf dem Unterwagen möglich ist.

Zur Optimierung der Antriebsleistung und zur Anpassung des Fahrverhaltens der Arbeitsmaschine an die jeweiligen Bedingungen kann zwischen dem Elektromotor und der Zentralwelle ein Getriebe angeordnet sein, das insbesondere als Übersetzungs- oder Schaltgetriebe ausgebildet ist, über den eine Endlosdrehung des Oberwagens auf dem Unterwagen möglich ist.

Um die Arbeitsmaschine nach der Erfindung mit einer besonders hohen Effizienz betreiben zu können, kann die Zentralwelle Bestandteil eines Rekuperationssystems zur Rückgewinnung elektrischer Energie sein, wobei dann in dem Oberwagen vorzugsweise eine Speichereinrichtung für die zurückgewonnene elektrische Energie angeordnet ist. Die Speichereinrichtung ist insbesondere ein Akkumulator oder ein Kondensator und zweckmäßigerweise mit dem Elektromotor verbunden.

Die selbstfahrende Arbeitsmaschine nach der Erfindung kann eine beliebige Arbeitsmaschine sein, die einen Unterwagen mit Antriebsrädern und einen Oberwagen umfasst, an dem ein Ausleger oder dergleichen gelagert ist. Beispielsweise ist die selbstfahrende Arbeitsmaschine ein Kran, ein Bagger, eine Materialumschlagmaschine, ein Telehandler oder dergleichen.

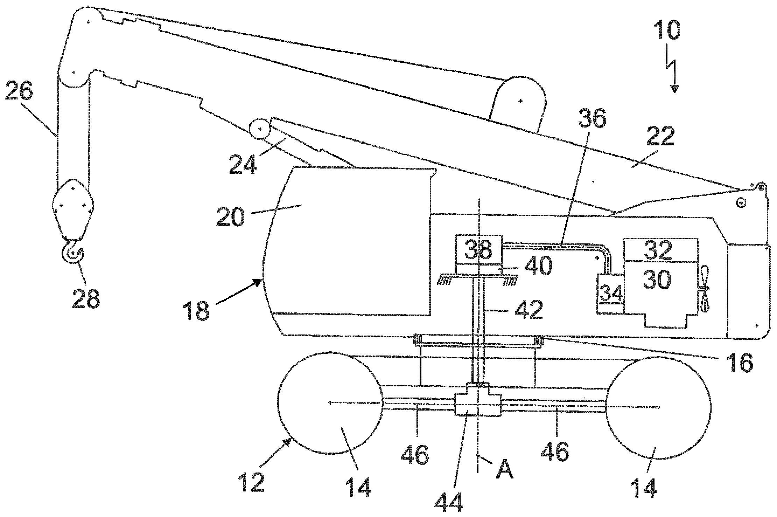

Weitere Vorteile und vorteilhafte Ausgestaltungen des Gegenstandes der Erfindung sind der Beschreibung, der Zeichnung und den Patentansprüche entnehmbar.

Ein Ausführungsbeispiel einer selbstfahrenden Arbeitsmaschine nach der Erfindung ist in der Zeichnung schematisch vereinfacht dargestellt und wird in der nachfolgenden Beschreibung näher erläutert.

Die einzige Figur der Zeichnung zeigt einen Aufbau einer selbstfahrenden Arbeitsmaschine nach der Erfindung in stark schematisierter Weise.

In der Zeichnung ist ein Mobilkran 10 gezeigt, der eine selbstfahrende Arbeitsmaschine darstellt. Der Mobilkran 10 hat einen Unterwagen 12, der zweiachsig ausgebildet ist und mit Antriebsrädern 14 versehen ist, die Bestandteile eines Fahrgestells des Unterwagens 12 sind.

Auf dem Unterwagen 12 ist über einen in üblicher Weise ausgebildeten Drehkranz 16 ein sogenannter Oberwagen 18 gelagert. Eine von dem Drehkranz 16 gebildete Drehachse ist in der Zeichnung mit "A" gekennzeichnet. Über den Drehkranz 16 ist eine Endlosdrehung des Oberwagens 18 auf dem Unterwagen 12 möglich.

Der Oberwagen 18 weist eine Führerkabine 20 auf, in der im Wesentlichen sämtliche Bedienelemente des Mobilkrans 10 angeordnet sind, sodass diese von einem Führer des Mobilkrans 10 in bequemer Weise erreichbar sind. Des Weiteren ist an dem Oberwagen 18 ein Kranausleger 22 schwenkbar gelagert, der teleskopierbar ausgebildet sein kann und einerseits mit Verstellzylindern 24 und andererseits mit einem Seilzug 26 für einen Kranhaken 28 versehen ist.

In dem Oberwagen 18 ist ein als Dieselmotor ausgebildetes Antriebsaggregat 30 angeordnet, das eine Hydraulikpumpe 32 zur Betätigung der Verstellzylinder 24 antreibt. Zudem treibt das Antriebsaggregat 30 einen Stromgenerator 34 an, der über elektrische Leitungen 36 mit einem Elektromotor 38 verbunden ist. Der Elektromotor 38, der mit einer aus der Führerkabine 20 ansteuerbaren Steuereinrichtung verbunden ist, treibt über ein Schaltgetriebe 40 eine Zentralwelle 42 an, dessen Achse mit der Drehachse A des Oberwagens 18 zusammenfällt. Die Zentralwelle 42 durchgreift den Drehkranz 16 zwischen dem Unterwagen 12 und dem Oberwagen 18 und führt zu einem in dem Unterwagen 12 angeordneten Verzweigungsgetriebe 44, das über Wellen 46 mit den Antriebsrädern 14 des Unterwagens 12 verbunden ist.

Bei dem vorstehend beschriebenen Mobilkran der Erfindung treibt also ein in dem Oberwagen angeordneter Elektromotor, der von einem Stromgenerator 34 versorgt wird, über die mechanische Zentralwelle 42, die den Drehkranz 16 durchgreift, die Antriebsräder 14 des Unterwagens 12 an. Eine Fahrbewegung des Mobilkrans 10 wird mithin durch eine Betätigung in dem Oberwagen 18 angeordneten Antriebseinrichtung in Form des Elektromotors 38 ausgelöst.

### Bezugszeichenliste

- 10: Mobilkran
- 12: Unterwagen
- 14: Antriebsräder
- 16: Drehkranz
- 18: Oberwagen
- 20: Führerkabine
- 22: Kranausleger
- 24: Verstellzylinder
- 26: Seilzug
- 28: Kranhaken
- 30: Antriebsaggregat
- 32: Hydraulikpumpe
- 34: Stromgenerator
- 36: Elektrische Leitungen
- 38: Elektromotor
- 40: Schaltgetriebe
- 42: Zentralwelle
- 44: Verzweigungsgetriebe
- 46: Wellen
- A: Drehachse

## Patentansprüche

1. Selbstfahrende Arbeitsmaschine, umfassend einen Unterwagen (12), der mit Antriebsrädern (14) versehen ist, die mittels einer Antriebseinrichtung angetrieben sind, und mit einem Oberwagen (18), der auf dem Unterwagen (12) drehbar gelagert ist und in dem ein Antriebsaggregat (30) angeordnet ist und an dem ein Ausleger (22) für ein Arbeitswerkzeug gelagert ist, **dadurch gekennzeichnet, dass** das Antriebsaggregat (30) einen Stromgenerator (34) antreibt, der eine Stromquelle für einen in dem Oberwagen (18) angeordneten Elektromotor (38) ist, der die Antriebseinrichtung für die an dem Unterwagen (12) angeordneten Antriebsräder (14) ist.

2. Selbstfahrende Arbeitsmaschine nach Anspruch 1, **gekennzeichnet durch** eine Zentralwelle (42), die von dem Elektromotor (38) angetrieben ist und dessen Achse mit einer Drehachse (A) des Oberwagens (18) zusammenfällt.

3. Selbstfahrende Arbeitsmaschine nach Anspruch 2, **dadurch gekennzeichnet, dass** die Zentralwelle (42) mit einem in dem Unterwagen (12) angeordneten Getriebe (44) verbunden ist, über das die Antriebsräder (14) angetrieben sind.

4. Selbstfahrende Arbeitsmaschine nach Anspruch 2 oder 3, **dadurch gekennzeichnet, dass** die Zentralwelle (42) einen Drehkranz (16) durchgreift, über den der Oberwagen (18) drehbar auf dem Unterwagen (12) gelagert ist.

5. Selbstfahrende Arbeitsmaschine nach einem der Ansprüche 2 bis 4, **dadurch gekennzeichnet, dass** zwischen dem Elektromotor (38) und der Zentralwelle (42) ein Getriebe (40), insbesondere ein Übersetzungsgetriebe oder ein Schaltgetriebe angeordnet ist.

6. Selbstfahrende Arbeitsmaschine nach einem der Ansprüche 2 bis 5, **dadurch gekennzeichnet, dass** die Zentralwelle (42) Bestandteil eines Rekuperationssystems zur Rückgewinnung elektrischer Energie ist und in dem Oberwagen (18) eine Speichereinrichtung für die zurückgewonnene elektrische Energie angeordnet ist.

7. Selbstfahrende Arbeitsmaschine nach einem der Ansprüche 1 bis 6, **dadurch gekennzeichnet, dass** das Antriebsaggregat (30) ein Verbrennungsmotor, insbesondere ein Dieselmotor ist.

8. Selbstfahrende Arbeitsmaschine nach einem der Ansprüche 1 bis 7, **dadurch gekennzeichnet, dass** das Antriebsaggregat (30) eine Brennstoffzelle umfasst.

9. Selbstfahrende Arbeitsmaschine nach einem der Ansprüche 1 bis 8, **dadurch gekennzeichnet, dass** sie ein Kran, ein Bagger, eine Materialumschlagmaschine oder ein Telehandler ist.

## Claims

1. A self-propelled work machine, comprising an undercarriage (12) that is provided with drive wheels (14) driven by means of a drive device, and comprising an upper structure (18) that is rotatably mounted on the undercarriage (12) and in which a drive unit (30) is arranged and on which a boom (22) for a work tool is mounted,
**characterized in that**
the drive unit (30) drives a power generator (34) that is a power source for an electric motor (38) arranged in the upper structure (18), said electric motor (38) being the drive device for the drive wheels (14) arranged on the undercarriage (12).

2. The self-propelled work machine according to claim 1,
**characterized by**
a central shaft (42) that is driven by the electric motor (38) and whose axis coincides with an axis of rotation (A) of the upper structure (18).

3. The self-propelled work machine according to claim 2,
**characterized in that**
the central shaft (42) is connected to a gearing (44) that is arranged in the undercarriage (12) and via which the drive wheels (14) are driven.

4. The self-propelled work machine according to claim 2 or 3,
**characterized in that**
the central shaft (42) penetrates a revolving bearing collar (16) via which the upper structure (18) is rotatably mounted on the undercarriage (12).

5. The self-propelled work machine according to any one of claims 2 to 4,
**characterized in that**
a gearing (40), in particular a transmission gearing or a manual transmission, is arranged between the electric motor (38) and the central shaft (42).

6. The self-propelled work machine according to any one of claims 2 to 5,
**characterized in that**
the central shaft (42) is part of a recuperation system for recovering electrical energy, and a storage device for the recovered electrical energy is arranged in the upper structure (18).

7. The self-propelled work machine according to any one of claims 1 to 6,
**characterized in that**
the drive unit (30) is a combustion engine, in particular a diesel engine.

8. The self-propelled work machine according to any one of claims 1 to 7,
**characterized in that**
the drive unit (30) comprises a fuel cell.

9. The self-propelled work machine according to any one of claims 1 to 8,
**characterized in that**
it is a crane, an excavator, a material handling machine or a telehandler.

## Revendications

1. Machine de travail automobile, comprenant un chariot inférieur (12) qui est muni de roues d'entraînement (14) entraînées par un dispositif d'entraînement, et comprenant un chariot supérieur (18) qui est monté de manière tournant sur le chariot inférieur (12) et dans lequel une unité d'entraînement (30) est disposée et sur lequel une potence (22) pour un outil de travail est montée,
**caractérisée en ce que**
l'unité d'entraînement (30) entraîne un générateur de courant (34) qui est une source de courant pour un moteur électrique (38) disposé dans le chariot supérieur (18), ledit moteur électrique (38) étant le dispositif d'entraînement pour les roues d'entraînement (14) disposées sur le chariot inférieur (12).

2. Machine de travail automobile selon la revendication 1,
**caractérisée par**
un arbre central (42) qui est entraîné par le moteur électrique (38) et dont l'axe coïncide avec un axe de rotation (A) du chariot supérieur (18).

3. Machine de travail automobile selon la revendication 2, **caractérisée en ce que**
l'arbre central (42) est lié à un engrenage (44) qui est disposé dans le the chariot inférieur (12) et par lequel les roues d'entraînement (14) sont entraînées.

4. Machine de travail automobile selon la revendication 2 ou 3,
**caractérisée en ce que**
l'arbre central (42) pénètre une couronne d'orientation (16) par laquelle le chariot supérieur (18) est monté de manière tournant sur le chariot inférieur (12).

5. Machine de travail automobile selon l'une quelconque des revendications 2 à 4,
**caractérisée en ce qu'**
un engrenage (40), notamment un engrenage de transmission ou une boîte de vitesse, est disposé entre le moteur électrique (38) et l'arbre central (42).

6. Machine de travail automobile selon l'une quelconque des revendications 2 à 5,
**caractérisée en ce que**
l'arbre central (42) fait partie d'un système de récupération destiné à récupérer de l'énergie électrique et un dispositif de stockage pour l'énergie électrique récupérée est disposé dans le chariot supérieur (18).

7. Machine de travail automobile selon l'une quelconque des revendications 1 à 6,
**caractérisée en ce que**
le groupe d'entraînement (30) est un moteur à combustion, notamment un moteur diesel.

8. Machine de travail automobile selon l'une quelconque des revendications 1 à 7,
**caractérisée en ce que**
l'unité d'entraînement (30) comprend une pile à combustible.

9. Machine de travail automobile selon l'une quelconque des revendications 1 à 8,
**caractérisée en ce qu'**
elle est une grue, une excavatrice, une machine de manutention de matériaux ou un chariot télescopique.
